(19) Europäisches Patentamt
European Patent Office
Office européen des brevets

(11) Publication number: 0 384 661 A1

(12) EUROPEAN PATENT APPLICATION

(21) Application number: 90301693.9

(22) Date of filing: 16.02.90

(51) Int. Cl.[5]: A01N 33/22, A01K 74/00, C04B 24/00

(30) Priority: 24.02.89 US 315627

(43) Date of publication of application: 29.08.90 Bulletin 90/35

(84) Designated Contracting States: AT BE CH DE DK ES FR GB GR IT LI LU NL SE

(71) Applicant: ROHM AND HAAS COMPANY
Independence Mall West
Philadelphia Pennsylvania 19105(US)

(72) Inventor: Lange, Barry Clifford
1031 Barley Way
Lansdale, Pennsylvania 19446(US)
Inventor: Sherba, Samuel Eugene
41 Montclair Lane
Willingboro, New Jersey 08046(US)
Inventor: McLemore, Janet Hanka
2037 Oakdale Avenue
Glenside, Pennsylvania 19038(US)

(74) Representative: Angell, David Whilton et al
ROHM AND HAAS (UK) LTD. European Operations Patent Department Lennig House
2 Mason's Avenue
Croydon CR9 3NB(GB)

(54) **Antialgal compositions comprising diphenylethers.**

(57) Disclosed herein is a method of controlling algae comprising using a compound of the formula

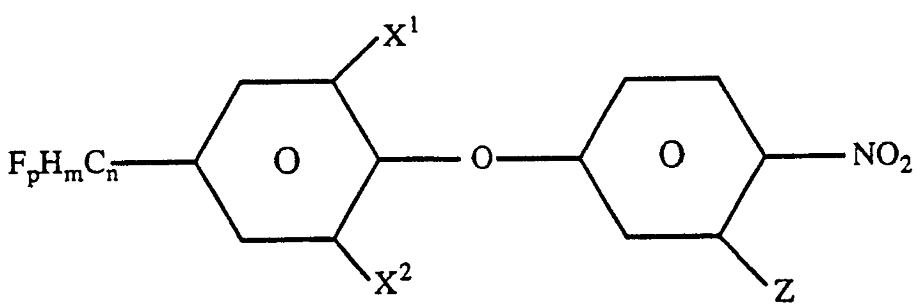

wherein X are independently selected from hydrogen, halogen, trihalomethyl, cyano, and ($C_1$ - $C_4$) alkyl;
Z is carbalkoxyalkoxy, or lower alkoxy;
p is an integer from 1 to $2n+1$;
m is an integer of 0 to $2n$;
where n is an integer of 1 to 5 and $m+p = 2n+1$

EP 0 384 661 A1

# ANTIALGAL COMPOSITIONS COMPRISING DIPHENYLETHERS

The present invention is concerned with methods of controlling algae, and algae-resistant compositions and articles.

The presence of algae in various aqueous systems such as latices, paints, coatings, cooling water systems, decorative ponds and the like, can cause deterioration or disfigurement to these systems. For example, painted surfaces may be disfigured by the unsightly buildup of algae, thus detracting from the overall aesthetics of the painted article; cooling towers may lose efficiency due to the buildup of algae on surfaces, thus reducing the heat transfer capabilities of the tower. It is conventional to practice methods which inhibit the algal deterioration of such systems by incorporating a variety of additives or combination of additives that are characterized by having antialgal activity.

A wide variety of materials have been used to control algae in different environments, some of which are: chlorine/bromine compounds, glutaraldehyde, isothiazolones, organotin formulations, copper salts, quaternary ammonium compounds (SD Strauss and PR Puckorius in *J. Power,* S1, June 1984), triazines. Each has deficiencies related to toxicity, pH and temperature sensitivity, limited effectiveness, chemical stability, and/or compatibility.

Different diphenylethers ("DPEs") have been found to have widely different antimicrobial properties. See, for example, halogenated hydroxy (acyloxy) DPEs (US-A-3506720, 3629477, 4268693, 4339462), substituted nitro/halo DPEs (US-A-3772445, 3908019), and nitro/trifluoromethyl DPEs (US-A- 4112002).

U.S.-A-3787217 and Japanese Kokai Patent Application 48-48624 to Nitta *et al* are directed towards the use of halogenated and alkyl substituted DPEs as paint antifouling agents and discloses the use of these materials to control growth of clams, barnacles, and shellfish larvae at 0.5-1.0 ppm dosage levels. These patents do not, however, teach or suggest the use or efficacy of substituted fluoroalkyl DPEs.

GB-A-1592011 to Ciba-Geigy discloses the use of DPEs containing amino (or substituted amino) or hydroxy (or ester derivatives of organic/inorganic acids) substituents as algicides, particularly dichloro-and trichloro-substituted DPEs. This patent does not, however, teach or suggest the use of fluoroalkyl DPEs without hydroxy or amino substituents.

J. Lorenz discloses that acifluorfen (2-chloro-4-trifluoromethylphenyl-3′-carboxy-4′-nitrophenylether, sodium salt) is ineffective at all levels tested on 10 differents types of algae in a screening study of commercial herbicides for use as additives in antifouling paints ("Selective Acting Antifouling Additives," Seventh Annual Congress on Marine Corrosion and Fouling, Valencia, Spain, November 10, 1988).

Numerous agricultural herbicides are known to be effective in controlling specific nuisance plants (weeds), crops, etc. The modes of action of such agricultural herbicides have been extensively studied and reported in the following references: Boger *et al* (*Z. Naturforsch,* 42c, 819 (1987), 36c, 633 (1981), 39c, 486 (1984), 38c, 556 (1983); *Weed Science,* 33, 766 (1985), 31, 338 (1983), 29, 371 (1981), 29, 169 (1981); *J Agric Food Chem,* 32, 868 (1984), 32, 725 (1984), 32, 523 (1984); *Pesticide Biochemistry and Physiology,* 20, 183 (1983), 19, 309 (1983); *IUPAC Pesticide Chemistry,* Vol 3, 97-102 (1983), Vol 1, 321-326 (1983); *Plant Science Letters,* 24, 347 (1982). These articles report studies on the primary modes of action using a model alga, ***Scenedesmus acutus,*** to provide quick and reliable measures for understanding structure-reactivity relationships among major known herbicides, including a variety of DPEs. Boger *et al* observed the effect of many DPEs against various physiological and biochemical processes, concluding that it was not clear which structures are necessary to affect various modes of herbicidal action: inhibition of photosynthetic electron transport, energy transfer inhibition, and peroxidative destruction of photosynthetic membranes. The parameters measured in the mode of action studies were pigment loss (bleaching effects), short-chain hydrocarbon production due to fatty acid oxidation, reduction of photosynthetic oxygen evolution, etc. Thus, Boger *et al* taught that phytotoxic effects are due to the influence of more than a single biochemical mode of action. Structurally different DPEs brought about similar responses among the parameters studied by Boger *et al.* The relative potential of given DPEs or other herbicides to alter electron transport, peroxidation, or energy transfer modes of action is not necessarily indicative of herbicidal effectiveness. In summary, although Boger *et al* disclose possible pathways for herbicidal modes of action, they do not teach or suggest the use of any of these DPEs to control algae in their natural environment where water solubility, alkaline pH stability characteristics, etc., are important variables. The algae used in the Boger *et al* studies served only as a model to illustrate different biochemical modes of action operable with a variety of known herbicides.

Based on the aforementioned performance deficiencies of conventional antialgal compounds there is a need for more effective antialgal agents that can be used at lower dosage rates; thus being more cost effective for the end user, reducing the pollution load on the affected environmental systems, and reducing

the side effects to nearby non-target organisms, such as fish, useful crops, etc.

The present invention provides the use of a compound of the formula (I)

(I)

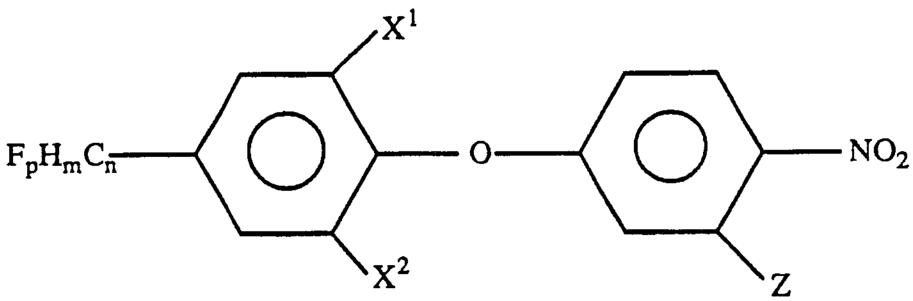

wherein $X^1$,$X^2$ are each independently selected hydrogen, halogen, trihalomethyl, cyano, or ($C_1$ - $C_4$) alkyl, and

Z is carbalkoxyalkoxy or lower alkoxy;

p is an integer from 1 to 2n+1;

m is an integer of 0 to 2n;

where n is an integer of 1 to 5 and m+p = 2n+1

for the control of algae.

By 'lower' alkoxy is meant an alkoxy preferably having no more than 8 carbons.

Although Z can be as defined in U.S.-A-4,772,744 and 3,798,276, preferred compounds for use in controlling algal growth are of the formula

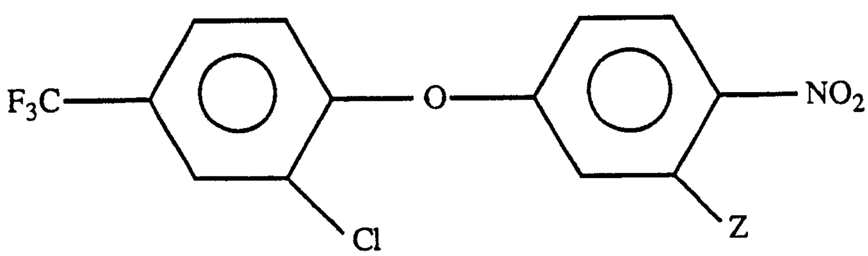

wherein Z is lower alkoxy or carbalkoxyalkoxy;

A most preferred compound is oxyfluorfen which has the formula

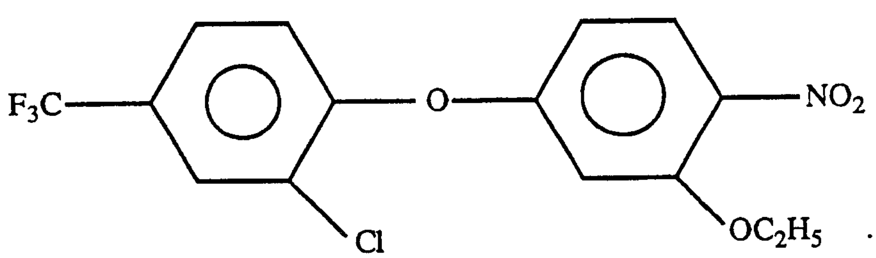

The invention also provides a method for inhibiting or preventing the growth of algae in a locus subject or susceptible to contamination thereby, comprising incorporating into or onto the locus a compound of the formula (I) as defined above in an amount effective to adversely affect the growth of said algae. Important examples of such loci are cooling tower water, coating or impregnant compositions, and articles such as fish nets or swimming lines etc. which are coated or impregnated with such compositions.

The present invention enables algae control to be accomplished with very low levels of active ingredient, using a compound which is compatible with a large variety of systems susceptible to deterioration by algae.

One extremely important and significant use of the compounds is to control algae in a cooling tower. Preferably the compound is used at a concentration of about 0.001 to about 20 ppm in cooling tower water.

Another significant use of the invention is to control algal growth in a coating or impregnant, and in this application, the compound is preferably used at a concentration of about 0.01 to about 10 percent. The resultant coatings or impregnant compositions provide superior resistance to algal growth, and yet contrary to the case with other algicides, the physical properties of the treated articles should not be affected.

Another important specific use is as an algicidal wash, where the compound would be used at high concentrations to remove existing algae; to control algae, on the other hand, a lower concentration is sufficient.

The algal resistant compositions can also be used in construction products such as stucco, roof mastics, wall mastics, and masonry coatings for algae protection; in clear finishes and coatings to protect underlying substrates from algae; for algae control in aquaculture, including aquaria, fish hatcheries, shrimp ponds, finfish ponds, mollusc and crustacean cultivation; for algae control in recreational and decorative bodies of water such as swimming pools, lakes, fountains and decorative ponds; for algae control in bodies of water for industrial or municipal use, such as settling or separation ponds, spray ponds, waste treatment ponds, and water reservoirs; for algae control in hydroponic farming; for algae control in processing and manufacture of pulp and paper products; for inclusion in plastics or in coatings for plastics to protect against algae; and in plastics or coatings for plastics for swimming pool liners.

The DPE compound can also be used in many other applications to control algal growth, for example in a decorative pond, desirably at a concentration of about 50 ppb to about 20 ppm, or applied to a fish net in a coating or impregnant composition.

Outstandingly improved fish nets, swimming pool liners, and painted wooden surfaces, resistant to algae, which have been treated with the aforementioned compound(s) are also part of the invention.

Recent advances in molecular biology and taxonomy have provided for the distinction of photosynthetic procaryotic bacteria versus eucaryotic algae. In the past literature, the term "blue-green algae" made reference to a group of microorganisms which possessed chlorophyll and appeared blue-green in color. More recent textbooks on microbiology (*Biology of Microorganisms*, TD Brock, DW Smith, and MT Madigan, Prentice Hall, Inc. 1984) have distinguished these organisms from eucaryotic algae, such as the green algae, and considered them to be most appropriately classified as "blue-green bacteria" or "cyanobacteria." This distinction is made since the cell architecture more closely resembles the procaryotic bacteria than eucaryotic algae. Therefore, we refer herein to photosynthetic blue-green microorganisms as cyanobacteria or blue-green bacteria.

The following examples represent just a few of the many uses and compounds of the invention. They are intended to be illustrative but not limiting. Various modifications, alternatives, and improvements should become apparent to those skilled in the art.

EXAMPLES

**EXAMPLE 1**

Oxyfluorfen was tested as a water treatment antialgal compound in model cooling towers which simulate pertinent process variables of industrial cooling towers. Compounds were dosed on a regular basis and the efficacy of the treatments was determined by measuring a parameter of algal or cyanobacterial biomass; specific operating parameters are described below.

A. Model Cooling Tower Setup

The basic design consisted of an acrylic plastic tower placed within a 17-liter polycarbonate basin. Each model contained a temperature control system, acid ($H_2SO_4$) or base (KOH) feed for pH control, air flow regulators, water recirculation system, and a makeup water supply. Two sets of five towers were placed in vented enclosures.

The basin contained an overflow port positioned to provide a constant 8-liter working volume in the system. The tower was made of acrylic plastic with a water flow distribution box at the top and a series of

removable slats. Slats were constructed of plastic or southern yellow pine (for biofilm sampling) and were positioned to provide a uniform cascade of the recirculating water over the surfaces. A portion of the recirculating water flow was returned at the bottom of the basin to supply constant mixing within the system.

Illumination was provided by cool white and grow-lux fluorescent lights operated on a 19 hours per day cycle. The heating system for each unit consisted of an immersion heating element, temperature controller, two thermistors, and a direct readout thermometer. The recirculation water was delivered with magnet drive centrifugal pumps. All other liquid flows were provided by peristaltic pumps which were calibrated prior to each experiment.

B. Operating Parameters

The model cooling towers were designed and operated to maintain a constant half-life in each unit. This was achieved by adjusting the makeup flow daily, to provide the desired blowdown (effluent) flow rate. By this approach, tested compounds or other chemicals added to the recirculating water remained in the system for a controlled period of time. The rate of removal of a given compound from the system was thereby determined by the concentration of the material in the bulkwater and the rate of blowdown from the tower. The physical and chemical parameters used in this study are summarized in Table 1.

Each model unit received a semicontinuous, automated addition of nutrients, hardness, and scale/corrosion control chemicals (Table 2) to the deionized water supply. A synthetic makeup water was developed (Table 3) and used in place of tap water. Stock solutions of the various components were prepared and added to each tower at a specific rate to achieve the desired concentration in the recirculating water. The rate of addition of each component to the system was designed to equal the rate of removal of the component from the tower due to blowdown. The deionized water supply to each unit was adjusted daily to maintain the desired blowdown rate. Under these conditions, for a given component, the concentration in the recirculating water and mass loading (mg/day) to the system was constant.

Table 1.

| Operating Parameters for Model Cooling Towers | |
|---|---|
| Parameter | Setting |
| Total volume (liters) | 8 |
| Recirculation rate (liters/min) | 3 |
| Blowdown rate (ml/hr) | 55 |
| Water Hardness (as ppm $CaCO_3$) | 520 |
| Concentration cycles | 3 |
| Residence time (hr) | 145 |
| Half-life (hr) | 100 |
| Temperature (C) | 35 |
| pH | 8.5 |

Table 2.

| Scale and Corrosion Treatment Formulation | |
|---|---|
| Component | Concentration (ppm ai) in recirculating water |
| Polyacrylic (a) | 5.0 |
| Phosphonate (b) | 5.0 |
| Tolyltriazole (c) | 2.0 |

(a) Acrysol QR1086 (Rohm and Haas Co)
(b) Bayhibit AM (Mobay Chemical Co)
(c) Cobratec TT-50-S (Sherwin Williams Chemical Co)

Table 3.

| Recirculating Water Characteristics for Model Cooling Tower | |
|---|---|
| Component | Concentration (ppm) |
| $NH_4NO_3$ | 48.9 |
| $KH_2PO_4$ | 13.2 |
| Glucose | 18.8 |
| Na Acetate | 25.7 |
| $CaCl_2(2H_2O)$ | 486 |
| $MgCl_2(6H_2O)$ | 366 |
| NaCl | 120 |
| $FeCl_3(6H_20)$ | 3.0 |

C. Microbiological Inoculum

Each of the cooling tower basins received a daily inoculation (5 ml total) of a mixed population of algae and blue-green bacteria. The culture was obtained from surface scrapings of industrial cooling towers; the mixed populations were maintained at room temperature in "Modified Allen's Media Formulation A," described in Part D, below. The wooden slats which served as the sampling site were prefouled prior to each experiment. The slats were placed in a tray containing mineral salts solution plus the algal-bacterial cultures and incubated at room temperature. The surfaces of the slats were brushed to remove the visibly adherent biofilm which developed. The prefouled slats were placed in the tower directly beneath the distribution box at the beginning of each experiment.

D. Preparation of Modified Allen's Media Formulation A

Stock A

10 g $NaNO_3$
1 g $CaCl_2(2H_2O)$
3 g $MgSO_4$
1 g NaCl
1.6 liters Deionized Water

Stock B

7 g $KH_2PO_4$
3 g $K_2HPO_4$

800 ml Deionized Water
Stock C
10 g Proteose Peptone Broth
100 ml Deionized Water
Stock of Trace Iron
1.03 g $Na_2EDTA$
0.77 g $FeSO_4(7H_2O)$
500 ml Deionized Water
Stock of Trace Metals
0.450 g $Na_2B_4O_7(H_2O)$
0.180 g $MnCl_2(4H_2O)$
0.022 g $ZnCl_2(7H_2O)$
0.005 g $CuCl_2(2H_2O)$
0.003 g $Na_2MoO_4(2H_2O)$
0.003 g $VOSO_4(2H_2O)$
0.001 g $CoCl_2(6H_2O)$

Each stock was autoclaved separately, then combined as follows:

40 ml Stock A
20 ml Stock B
10 ml Stock C
5 ml Stock of Trace Iron
5 ml Stock of Trace Metals
920 ml Deionized Water

## E. Efficacy Evaluation

The efficacy of antialgal treatments on the control of biofilm development was examined. Individual towers received one-per-week slug doses of the compound tested. Oxyfluorfen was tested (at 0.050 ppm; dosed from an acetone stock solution) in one tower and another tower received a 1.0 ppm active ingredient ("ai") treatment of Isothiazolone A (75% 5-chloro-2-methyl-3-isothiazolone/25% 2-methyl-3-isothiazolone) and another tower served as the "no treatment" control. All concentrations described in this study are given as ppm active ingredient.

## F. Sampling Procedures

The biofilms which developed in the model cooling towers were harvested after four weeks of operation; the attached growth was carefully scraped from the wooden slat surface (17.5 $cm^2$) and suspended in 100 ml of sterile buffered saline. The biofilm extracts were homogenized for one minute at maximum setting with a Waring blender and analyzed as described below.

## G. Analytical Procedures

Microbiological analyses were performed on the blended biofilm extracts and standardized per unit area ($cm^2$) of sampling surface, where appropriate. All tests were performed in duplicate and the mean values reported. The algal-cyanobacterial component of the samples was estimated from chlorophyll a ("chl a") values. Samples were extracted overnight in 90% acetone and the chlorophyll a content determined with a Turner fluorometer. This parameter is proportional to the amount of algal/cyanobacterial biomass present in the samples and was expressed as $\mu g$ chl a/$cm^2$ of biofilm surface.

## H. Results

The findings of this study demonstrated the general efficacy of oxyfluorfen compared to a commercial antialgal compound, Isothiazolone A.

| Efficacy of Oxyfluorfen in Model Cooling Tower Biofilm | | |
|---|---|---|
| Treatment | Chlorophyll a in Biofilm | |
| | (ug/cm2) | % of control |
| Oxyfluorfen (0.05 ppm) | 3.27 | 24.0 |
| Isothiazolone A (1.0 ppm) | 3.70 | 27.1 |
| Control (no antialgal compound) | | 13.64100.0 |

**EXAMPLE 2**

A. General Procedure

A study was conducted with simulated cooling tower water to determine the effect of oxyfluorfen as an antialgal compound under simulated cooling tower conditions. Synthetic cooling tower water was made up with the following final concentrations (pH 8.5):

| Component | Concentration (mg/l) |
|---|---|
| $NH_4NO_3$ | 357 |
| $K_2HPO_4$ | 422 |
| Glucose | 25.0 |
| Na acetate | 34.2 |
| $Na_2CO_3$ | 466 |
| $K_2SO_4$435 | |
| $CaCl_2(2H_2O)$ | 642 |
| $MgCl_2(6H_2O)$ | 478 |
| $FeCl_3((6H_2O)$ | 4.0 |
| Polyacrylic (a) | 5.0 |
| Phosphonate (b) | 5.0 |
| Tolyltriazole (c) | 2.0 |

(a) Acrysol QR1086 (Rohm and Haas Co)
(b) Bayhibit AM (Mobay Chemical Co)
(c) Cobratec TT-50-S (Sherwin Williams Chemical Co)

Approximately 500 ml of the above solution was added to half-gallon jars and each jar was charged with given levels of oxyfluorfen (supplied as an emulsifiable concentrate); one jar contained no antialgal compound (control). Another set of jars was prepared with known levels of Isothiazolone A, a known antialgal compound for comparison purposes.

Each jar was inoculated with 5 ml of a mixed cooling tower culture which was obtained from surface scrapings of industrial cooling towers; the mixed populations were maintained at room temperature in modified Allen's Media Formulation B described below in Part B. Each jar was inoculated two times per week to challenge the system. Jars were incubated under a 12 hour illumination cycle at room temperature (25 °C) and were mixed manually (by swirling) three times per day. Visual observations were recorded daily using the rating scale described in Part C.

| B. Preparation of Modified Allen's Media Formulation B (pH 6.3) | |
|---|---|
| Component | Concentration (mg/l) |
| $NaNO_3$ | 250 |
| $CaCl_2(2H_2O)$ | 31 |
| $MgSO_4(7H_2O)$ | 75 |
| NaCl | 25 |
| $KH_2PO_4$ | 175 |
| $K_2HPO_4$ | 75 |
| $FeCl_3(6H_2O)$ | 7.5 |
| $Na_2(EDTA)$ | 10.3 |
| $Na_2B_4O_7(10H_2O)$ | 2.25 |
| $MnCl_2(4H_2O)$ | 0.90 |
| $ZnCl_2(7H_2O)$ | 0.11 |
| $CuCl_2(2H_2O)$ | 0.025 |
| $Na_2MoO_4(2H_2O)$ | 0.015 |
| $VOSO_4(2H_2O)$ | 0.015 |
| $CoCl_2(6H_2O)$ | 0.005 |

C. Results

| Visual Rating (7 Day Incubation) | | |
|---|---|---|
| Concentration (ppm) | Oxyfluorfen | Isothiazolone A |
| 0.000 | 5 | 5 |
| 0.005 | 0 | 5 |
| 0.010 | 0 | 5 |
| 0.025 | 0 | 5 |
| 0.050 | 0 | 5 |
| 0.100 | 0 | 5 |
| 0.250 | 0 | 5 |
| 0.500 | 0 | 4 |
| Rating Scale | | |
| 0 = no growth<br>1 = slight growth<br>3 = moderate growth<br>5 = abundant growth | | |

The results of this study demonstrate the extremely low levels of oxyfluorfen which were effective (5 ppb or less) for controlling cooling tower algae under simulated water chemistry conditions compared to Isothiazolone A which was ineffective under these conditions at levels as high as 500 ppb. The simulated water used in this study was derived from a survey of water quality chemistry values from actual industrial cooling towers; the addition of scale and corrosion control chemicals and alkaline pH was provided to closely mimic actual field conditions.

**EXAMPLE 3**

Efficacy studies were conducted on a variety of microorganisms with oxyfluorfen. Minimum Inhibitory Concentration (MIC) studies were conducted using microtiter plate assays. In this method, a wide range of concentrations was tested by preparing two-fold serial dilutions of the compound in 96-well plastic microtiter plates. All liquid media transfers were performed with calibrated single or multichannel digital pipetters. Stock solutions of compounds were prepared in appropriate solvents and dispensed to the growth medium. All subsequent dilutions in plates were made using the desired growth medium. The total volume of liquid in each well was 100 ul.

The pure cultures used in this study were obtained from the Culture Collection of Algae at the University of Texas at Austin (UTEX). The mixed culture of algae was obtained from a cooling tower biofilm and maintained in liquid medium; microorganisms used as inocula were cultured in shaken liquid culture (50 ml of Bristol's medium, pH 7.0, 25° C); *Journal of Phycology,* 23s: 1-47, 1987) for one week or as needed to attain a desired cell mass. The cultures were then inoculated into the microtiter plates using a 96-prong multiple inoculator (5 µl inoculum); each well received a standard suspension of biomass (5% inoculum). Plates were incubated at 25° C under constant illumination (500 ft candles). The extent of growth was determined under low magnification with the aid of a microtiter plate reader. The growth in each cell was monitored periodically and growth/no-growth was recorded after 14 or 21 days. Results were evaluated by determining the MIC (the lowest level of a compound required to completely inhibit or repress growth of an organism).

| MIC Values for Oxyfluorfen Against Green Algae, Cyanobacteria, and Mixed Cultures | |
|---|---|
| Microorganism | MIC (ppm) |
| Cyanobacteria: | |
| *Phormidium luridum var. olivace* | >500 |
| *Synechococcus leopooliensis* | >500 |
| *Nostoc commune* | >500 |
| *Anabaena flos-aquae* | >500 |
| Green Algae: | |
| *Scendesmus quadricaudra* | <0.002 |
| *Selanastrum capricornutum* | 0.008 |
| *Chlorella pyrenoidosa* | 0.125 |
| *Clorococcum oleofaciens* | >0.125 |
| Mixed Cooling Tower Culture | <0.004 |

**EXAMPLE 4**

Following the evaluation procedure of Example 3, compounds according to the following structural formula, with X and Y substituents according to Table 4A, were evaluated with the results shown in Table 4B.

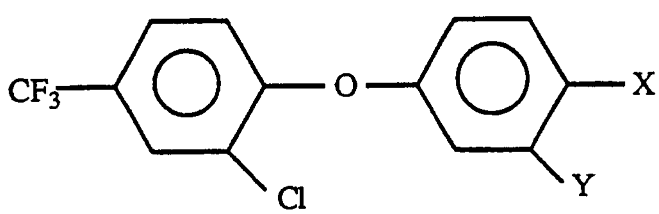

Table 4A

| | X | Y |
|---|---|---|
| 4A comparative | -H | -OH |
| 4B comparative | -H | -OAc |
| 4C comparative | $-NO_2$ | -OAc |
| 4D comparative | $-NO_2$ | -OH |
| 4E comparative | $-NO_2$ | -CO2Na |
| 4F comparative | $-NO_2$ | $-CO_2CH_2CO_2C_2H_5$ |
| 4G | $-NO_2$ | $-OCH(CH_3)CO_2C_2H_5$ |
| 4H | $-NO_2$ | $-OC_2H_5$ |

Table 4B

| MIC (ppm) versus | | |
|---|---|---|
| Compound | Mixed Cooling Tower Culture | *Anabaena flos-aquae* |
| 4A comparative | 1.6 | 3.1 |
| 4B comparative | 8.0 | 16 |
| 4C comparative | 0.25 | 12.5 |
| 4D comparative | 0.06 | 12.5 |
| 4E comparative | 12.5 | >50 |
| 4F comparative | 1.0 | ---- |
| 4G | 0.25 | ---- |
| 4H | <0.004 | >500 |

**EXAMPLE 5**

A. General Procedure

Solutions of oxyfluorfen were prepared as follows in 1-ounce (28.3g) glass vials. Oxyfluorfen concentrate (0.17 g) was added to 19.83 g latex paint formulation (described below) to give 2-lb oxyfluorfen/100 gal. (2 kg/833 l) paint solution; in a similar manner, 0.08 g oxyfluorfen concentrate was added to 19.92 g latex paint formulation to give 1-lb/100-gal (1 kg/833 l) solution. Oxyfluorfen concentrate (1.0 g) was added to 19.0 g mixture of 2 parts xylene/1 part cyclohexanone; 0.17 g of the resultant solution was added to 19.83 g latex paint formulation to give 0.1-lb/100-gal oxyfluorfen solution; in a similar manner, 0.016 g of xylene/cyclohexanone solution was added to 19.984 g latex paint formulation to give 0.01-lb/100-gal solution.

The solutions were stirred manually with Teflon spatulas and each was applied to two tongue depressors using #7 paint brushes. Two control tongue depressors were similarly prepared except without oxyfluorfen in the latex paint formulation. The tongue depressors were allowed to dry for one week and then inoculated with four 50 ul drops of mixed cooling tower algae (obtained from surface scrapings of industrial cooling towers and maintained in a modified Allen's media formulation, described in EXAMPLE 1).

The tongue depressors were placed on plastic stages within large petri dishes and the area around the stages was filled with deionized water. The petri dishes were covered and placed in a Precision (Model 816) low temperature (25C) illuminated incubator for one week; at this point the tongue depressors were re-inoculated with one ml of the mixed cooling tower algae and returned to the incubator. The tongue depressors where then checked daily for algal growth (visual); results are found in Part C. Oxyfluorfen significantly reduced the rate of algal growth for up to 14 days at levels as low as 10 ppm and totally

inhibited algal growth at levels above 100 ppm.

B. Preparation of Latex Paint Formulation

Oxyfluorfen was added as a 24% emulsifiable concentrate in mixed organic solvents. The following formulation is a typical paint blend for testing of stabilization against algal activity. Texanol¿ is trimethyl-1,3-pentanediol monoisobutyrate supplied by Eastman Chemical; Rhoplex AC-64 is a commercially available latex of a copolymer of butyl acrylate and methyl methacrylate. This paint formulation has a pH of 9.4 and an initial viscosity of 8.9 KU (Krebs units).

| | | |
|---|---|---|
| Water | | 56.0134.4 |
| Tamol 960 (40%), poly(methacrylic acid) | 3.6 | 8.6 |
| Potassium tripolyphosphate | 0.75 | 1.8 |
| Triton CF-10 surfactant | 1.3 | 3.1 |
| Colloid 643 thickener | 0.5 | 1.2 |
| Propylene glycol | 17.0 | 40.8 |
| Ti-Pure R-902 titanium dioxide | 112.5 | 270 |
| Minex 4 filler pigment | 79.7 | 191.3 |
| Icecap K filler pigment | 25.0 | 60 |
| Attagel 50 clay | 2.5 | 6 |
| Let Down ----------------- | | |
| AC-64 (60.5%) acrylic copolymer | 153.0 | 367.1 |
| Colloid 643 | 1.5 | 3.6 |
| Texanol coalescent | 4.7 | 11.3 |
| Ammonia (28%) | 1.16 | 2.8 |
| Natrosol 250 MHR (2.5%) | 53.5 | 128.4 |
| Water | 54.5 | 130.8 |
| | 581.2 | 1394.9 |

| C. Oxyfluorfen Performance in Paint Algicide Test | | | | |
|---|---|---|---|---|
| Oxyfluorfen Conc (ppm) | Sample lb/100-gal | 7 Days Algal Growth | 10 Days Algal Growth | 14 Days Algal Growth |
| 0 | Blank | 0 | 4 | 6 |
| 10 | 0.01 | 0 | 2 | 3 |
| 100 | 0.10 | 0 | 1 | 1 |
| 1000 | 1.0 | 0 | 0 | 0 |
| 2000 | 2.0 | 0 | 0 | 0 |
| Scale for Algal Growth | | | | |
| 0 = No Algal Growth<br>5 = Moderate Algal Growth<br>10 = Heavy Algal Growth | | | | |

**Claims**

1. The use of a compound of the formula (I)

(I)

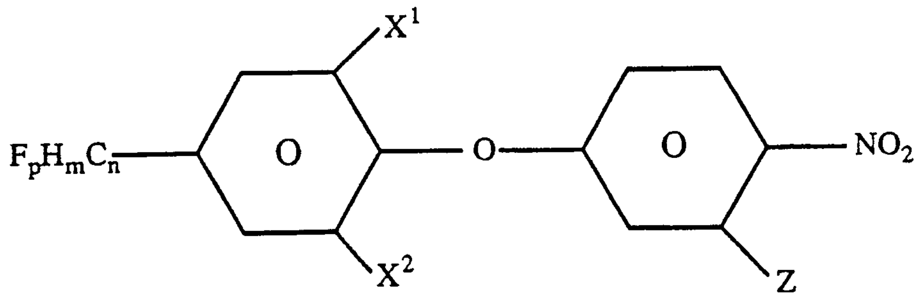

wherein $X^1$, $X^2$ are each independently selected from hydrogen, halogen, trihalomethyl, cyano, and ($C_1$ - $C_4$) alkyl;
Z is carbalkoxyalkoxy, or lower alkoxy;
p is an integer from 1 to 2n + 1;
m is an integer of 0 to 2n;
where n is an integer of 1 to 5 and m + p = 2n + 1
for the control of algae.

2. The use according to claim 1 wherein said compound is of the formula

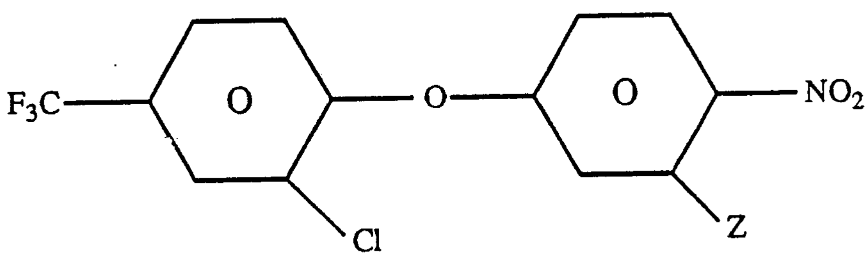

wherein Z is selected from the group consisting of alkoxy or carbalkoxyalkoxy.

3. Use according to claim 1 wherein said compound is oxyfluorfen of the formula

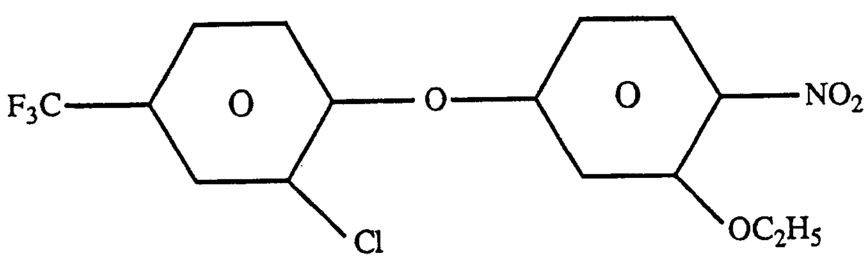

4. Method of inhibiting or preventing the growth of algae in a locus subject or susceptible to contamination thereby, comprising incorporating into or onto the locus a compound according to any preceding claim in an amount which is effective to adversely affect the growth of said algae.

5. Use or method according to any preceding claim wherein said compound is employed in cooling tower water at a concentration of from about 0.001 to about 20 ppm, or in a coating or impregnant at a concentration of from about 0.01 to about 10 percent, or in a decorative pond at a concentration of from about 0.05 ppm to about 20 ppm, or in aquaculture, aquaria, fish hatcheries, shrimp ponds, finfish ponds, mollusc cultivation, crustacean cultivation, swimming pools, lakes, spray ponds, fountains.

6. Method or use according to any one of claims 1 to 4 wherein said compound is used in an algicidal wash.

7. Coating or impregnant composition comprising from about 0.01 ppm to about 10 percent of the compound of the formula (1) as defined in any of Claims 1 to 3.

8. Fish net which has been coated or impregnated with a compound of the formula (I) as defined in any of Claims 1 to 3 or a composition according to Claim 7.

9. Stucco, roof mastic, wall mastic, masonry coating, plastic composition, swimming pool liner, or marine antifoulant composition comprising an algicidally effective amount of the compound of formula (I) as defined in any one of Claims 1 to 3.

European Patent Office

# EUROPEAN SEARCH REPORT

Application number

EP 90301693.9

## DOCUMENTS CONSIDERED TO BE RELEVANT

| Category | Citation of document with indication, where appropriate, of relevant passages | Relevant to claim | CLASSIFICATION OF THE APPLICATION (Int Cl 5) |
|---|---|---|---|
| D,A | GB - A - 1 592 011 (CIBA-GEIGY AG) * Claim 1 * -- | 1 | A 01 N 33/22<br>A 01 K 74/00<br>C 04 B 24/00 |
| A | GB - A - 1 521 472 (ROHM AND HAAS COMPANY) * Claim 3 * -- | 1 | |
| A | US - A - 4 417 919 (ROHR) * Abstract * -- | 1 | |
| A | US - A - 4 209 318 (JOHNSON) * Abstract * -- | 1 | |
| A | US - A - 4 185 995 (BAYER et al.) * Abstract * -- | 1 | |
| A | US - A - 4 093 446 (BAYER et al.) * Abstract * -- | 1 | TECHNICAL FIELDS SEARCHED (Int Cl 5) |
| A | US - A - 4 017 295 (TAKAHASHI et al.) * Abstract * ---- | 1 | A 01 N |

The present search report has been drawn up for all claims

| Place of search | Date of completion of the search | Examiner |
|---|---|---|
| VIENNA | 09-05-1990 | SCHNASS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document